# EUROPEAN PATENT APPLICATION

(11) **EP 4 450 458 A1**
(43) Date of publication of application: **23.10.2024**
(21) Application number: 22906724.4
(22) Date of filing: 13.12.2022
(51) Int. Cl.: C01B 32/20, C01B 32/198

(54) **METHOD FOR OBTAINING REDUCED GRAPHENE/GRAPHENE OXIDE FROM THE BLACK MASS OF DISCARDED LITHIUM-ION BATTERIES FROM ELECTRIC OR HYBRID MOTOR VEHICLES**

(30) Priority: 15.12.2021 ES 202131159
(71) Applicant: Consejo Superior De Investigaciones Científicas (CSIC), 28006 Madrid (ES); Centro de Investigaciones Energéticas, Medioambientales y Tecnológicas O.A., M.P. (CIEMAT), 28040 Madrid (ES)
(72) Inventor: LÓPEZ GÓMEZ, Félix Antonio, 28040 Madrid (ES); RODRÍGUEZ LARGO, Olga, 28040 Madrid (ES); ALCARAZ ROMO, Lorena, 28040 Madrid (ES); ALGUACIL PREGO, Francisco José, 28040 Madrid (ES); FERNÁNDEZ MARTÍNEZ, Rodolfo, 28040 Madrid (ES); RUCANDIO SÁEZ, Mª Isabel, 28040 Madrid (ES); GOMEZ MANCEBO, Mª Belén, 28040 Madrid (ES); MAROÑO BUJÁN, Marta, 28040 Madrid (ES)
(74) Representative: Pons
(86) International application number: PCT/ES2022/070795
(87) International publication number: WO 2023/111374

(57) **Abstract**

The present invention relates to a method for obtaining reduced graphene/graphene oxide from the black mass of discarded lithium-ion batteries from electric or hybrid motor vehicles. The present invention is therefore of interest for the municipal waste management industry, for the hybrid and electric motor vehicle manufacturing industry, and in turn, for the graphene industry.

## Description

The present invention relates to a method for obtaining reduced graphene/graphene oxide from the black mass of discarded lithium-ion batteries from electric or hybrid motor vehicles. The present invention is therefore of interest for the municipal waste management industry, for the hybrid and electric motor vehicle manufacturing industry, and in turn, for the graphene industry.

### BACKGROUND OF THE INVENTION

In the hydrometallurgical utilisation of spent or discarded lithium-ion batteries, graphite is a residual element. It so happens that graphite is a critical raw material for the EU as it is indispensable in the manufacture of key products in technologies serving the energy transition.

In recent literature, documents related to utilising and/or obtaining graphite from the anodes of discarded lithium-ion batteries from mobile phones and their subsequent transformation into reduced graphene/graphene oxide (rGO) can be found. See for example the following documents:
- Recycling of graphite and metals from spent Li-ion batteries aiming the production of graphene/CoO-based electrochemical sensors Journal of Environmental Chemical Engineering Volume 9, Issue 1, February 2021, 104689*.*
- Separation and recovery of carbon powder in anodes from spent lithium-ion batteries to synthesize graphene Scientific Reports volume 9, 9823 (2019*).*
- CN110589812A Method for preparing porous graphene by recycling graphite cathode materials from waste power batteries.
- CN105355996A Method for separating lithium and graphite from negative electrode material of waste lithium battery and resource utilization. However, the methods described in said documents are based on the oxidation of graphite with the traditional Hummers method (Hummers, W.S., and Offeman, R.E. (1958). Preparation of Graphitic Oxide. Journal of the American Chemical Society 80, 1339-1339) and result in a graphite oxide with a large number of structural defects.

Therefore, it is necessary to develop new methods for utilising spent or discarded lithium-ion batteries that result in higher quality critical raw materials.

### DESCRIPTION OF THE INVENTION

The object of the present invention relates to the use of graphite sourced from the recycling of discarded lithium-ion batteries from electric or hybrid motor vehicles for the transformation thereof into graphene-based materials: graphene oxide (GO) and reduced graphene oxide (rGO). In the method of the present invention, most of the metals contained in the initial black mass are removed to achieve a graphite with sufficient purity to be transformed into reduced graphene/graphene oxide.

In a first aspect, the present invention relates to a method for obtaining reduced graphene oxide (rGO), characterised in that it comprises the following steps:
a) leaching the black mass comprising graphite sourced from discarded lithium-ion batteries from electric or hybrid motor vehicles, wherein the elemental composition of said black mass comprises:
   ∘ between 30% and 33% C,
   ∘ between 10% and 30% Ni,
   ∘ between 5% and 15% Mn,
   ∘ between 3% and 5% Li,
   ∘ between 2% and 6% Co, and
   ∘ between 1% and 3% Cu,
   at a temperature of between 50°C and 100°C in the presence of
   - an acid selected from citric acid and sulphuric acid, wherein the concentration of said acid ranges between 1.25 M and 2 M, and
   - an oxidising agent selected from ozone and hydrogen peroxide,
   for a period of time comprised between 60 min and 90 min;
b) mixing the graphite powder obtained in step (a) with potassium permanganate KMnO₄, wherein the ratio of graphite powder: potassium permanganate KMnO₄ is between 0.9:6 and 1.1:6;
c) mixing the product obtained in step (b) with a mixture consisting of
   - sulphuric acid H₂SO₄ at a concentration of between 17.9 M and 18.1 M, and
   - phosphoric acid H₃PO₄ at a concentration of between 15.3 M and 15.5 M,
   wherein the ratio of sulphuric acid H₂SO₄: phosphoric acid H₃PO₄ is 9:1;
d) adding ultrapure water ice and then hydrogen peroxide H₂O₂ to the product obtained in step (c) and settling the graphite oxide obtained by removing the supernatant;
e) preparing an aqueous dispersion with the graphite oxide obtained in step (d), wherein the concentration of graphite oxide is between 4.8 mg·ml⁻¹ and 5.2 mg·ml⁻¹,
f) heating the aqueous dispersion obtained in step (e) in a hydrothermal reactor at a temperature of between 115°C and 125°C and for a period of time between 46 h and 50 h;
g) reducing the product obtained in step (f) with ascorbic acid at room temperature between 15°C and 25°C and for a period of time between 46 h and 50 h;
h) washing the product obtained in step (g) with ultrapure water and centrifugation;
i) drying the solid product obtained from step (h) at a temperature of between 55°C and 65°C and under vacuum for a period of time between 22 h and 26 h; and
j) calcining the product obtained in step (i) at a temperature of between 390°C and 410°C in an argon atmosphere for a period of time between 24 h and 28 h and grinding.

For discarded lithium-ion batteries sourced from mobile phones, the anode and cathode are easily separated manually. The elemental composition of the anode and cathode of a discarded lithium-ion battery sourced from mobile phones is as follows:
- Anode: 90-93% C, 0-2% Co and 0-1% Ni and Mn.
- Cathode: 82-90% Co, 5-10% Mn, 4-6% Li and 1-2% Cu.

In the present invention, the black mass sourced from discarded lithium-ion batteries from electric or hybrid motor vehicles is formed by the anode and the cathode due to the great difficulty of separating both in batteries of this type. The elemental composition of the assembly formed by the anode and cathode of a discarded lithium-ion battery from an electric or hybrid motor vehicle is as follows:
- 30-33% C,
- 10-30% Ni,
- 5-15% Mn,
- 3-5% Li,
- 2-6% Co, and
- 1-3% Cu.

In the present invention, the discarded lithium-ion battery from an electric or hybrid motor vehicle comprises graphite (the carbon in the elemental composition is in the form of graphite). In step (a) of the method of the present invention, said graphite is extracted from the discarded lithium-ion battery from an electric or hybrid motor vehicle by means of leaching at a temperature of between 50° C and 100° C in the presence of
- an acid selected from citric acid and sulphuric acid, wherein the concentration of said acid ranges between 1.25 M and 2 M, and
- an oxidising agent selected from ozone and hydrogen peroxide,
for a period of time between 60 min and 90 min. At the end of step (a), graphite powder is obtained.

Steps (b), (c) and (d) correspond to the oxidation method of Tour (Marcano, D.C., Kosynkin, D.V., Berlin, J.M., Sinitskii, A., Sun, Z.Z., Slesarev, A., Alemany, L.B., Lu, W., and Tour, J.M. (2010). Improved Synthesis of Graphene Oxide. Acs Nano 4, 4806-4814) by means of which the graphite powder obtained in step (a) is transformed into graphite oxide (GrO).

This is a method that offers significant advantages over the Hummers method conventionally used to obtain graphite oxide (GrO). On the one hand, it prevents the formation of toxic gases and also the risks associated with the different strongly exothermic reactions used in the aforementioned method. On the other hand, the highest proportion of oxidising agent used and the use of H₃PO₄ as an intercalating agent allows a higher yield of highly hydrophilic carbonaceous material to be obtained with a higher degree of oxidation than that obtained in the Hummers reference method. Furthermore, the Tour method allows greater control of the temperature of the graphite oxidation process, which translates into a greater number of isolated aromatic groups and accordingly a more regular structure with fewer defects than the graphite oxide (GrO) corresponding to obtaining same by means of the Hummers method.

Specifically, in step (b), the graphite powder obtained in step (a) is mixed with potassium permanganate KMnO₄, with the ratio of graphite powder:potassium permanganate KMnO₄ being between 0.9:6 and 1.1:6 in said mixture. At the end of step (b), graphite powder is obtained.

In step (c), the product obtained in step (b) is mixed with a mixture consisting of
- sulphuric acid H₂SO₄ at a concentration of between 17.9 M and 18.1 M, and
- phosphoric acid H₃PO₄ at a concentration of between 15.3 M and 15.5 M,
wherein the ratio of sulphuric acid H₂SO₄: phosphoric acid H₃PO₄ is 9:1.

In step (d), ultrapure water ice and then hydrogen peroxide H₂O₂, preferably hydrogen peroxide H₂O₂ at 30% V/V, is added to the product obtained in step (c), and the obtained graphite oxide (GrO) is settled, removing the supernatant preferably in a period of time of at least 12 h.

The term "ultrapure water" is understood in the present invention to mean water with a resistivity of 18 MΩ·cm.

Graphite oxide (GrO) exhibits numerous oxygenated groups such as hydroxyl, carbonyl, carboxyl, epoxy resin, decorating the basal structure of carbon atoms. This has the effect of expanding the interlaminar distance of the graphene layers that make up graphite, accordingly decreasing the intensity of the Van der Waals forces that hold them together. Furthermore, it makes these layers highly hydrophilic. In this way, they can be exfoliated in water by means of ultrasonication, thus obtaining graphene oxide (GO).

The main characteristic of GO is that it can be reduced to graphene sheets by means of removing the oxygenated groups, thus recovering the conjugated structure characteristic of graphene that gives it its extraordinary properties. The reduction has the drawback that it is not complete, but rather there are always residual functional groups, hence the product obtained is usually called reduced graphene oxide (rGO), it is possible to obtain more or less reduced graphene materials depending on the method used to carry out the reduction.

In steps (e), (f), (g), (h), (i) and (j), the graphite oxide (GrO) obtained in step (d) is transformed into reduced graphene oxide (rGO).

In step (e) of the process of the present invention, an aqueous dispersion is prepared with the graphite oxide (GrO) obtained in step (d), wherein the concentration of graphite oxide (GrO) is between 4.8 mg·ml⁻¹ and 5.2 mg·ml⁻¹.

In step (f) of the method of the present invention, said dispersion is heated in a hydrothermal reactor at a temperature of between 115°C and 125°C and for a period of time between 46 h and 50 h.

In the step (g), the product obtained in step (f) is reduced with ascorbic acid at room temperature between 15°C and 25°C and for a period of time between 46 h and 50 h.

In step (h), the product obtained in step (g) is washed with ultrapure water and centrifugation is carried out, preferably between 10,000 rpm and 10,100 rpm. More preferably, step (h) is repeated.

In step (i), the product obtained in step (h) is dried at a temperature of between 55°C and 65°C and under vacuum for a period of time between 22 h and 26 h, and in step (j) the product obtained in step (i) is calcined at a temperature of between 390°C and 410°C in an argon atmosphere for a period of time between 24 hours and 28 hours and is ground. Preferably, the calcination of step (j) is carried out with a high temperature ramp of between 4.5°C·min⁻¹ and 5°C·min⁻¹.

The reduced graphene oxide (rGO) obtained after step (j) has a high C/O ratio that results in notable electrical properties, thermal stability, hydrophobicity and high specific surface area, which in turn allows its use in various fields of application, such as energy storage, manufacture of supercapacitors, printed circuits, corrosion protection, support for heterogeneous catalysis, etc.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1****:** Diffractograms of the different treatments to which samples A) LM2_1 and B) LM2_3 have been subjected. The values of the "y" axis are increased by a factor to be able to represent each diffractogram separately from the others.
**Figure 2****:** Diffractograms of the different treatments to which sample LM3-1 has been subjected. The values of the "y" axis are increased by a factor to be able to represent each diffractogram separately from the others.

### EXAMPLES

Next, the invention will be illustrated by means of assays carried out by the inventors that demonstrate the effectiveness of the method of the present invention.

At the end of their life cycle, batteries from electric or hybrid motor vehicles are discharged to remove the remaining charge and are subjected to a mechanical treatment process consisting of consecutive steps of crushing, grinding, magnetic separation and eddy current separation. The final result consists of three fractions:
- a coarse metallic fraction;
- a mixed fraction containing plastics and crushed copper and aluminium sheets; and
- a black mass.

In general, the black masses sourced from spent lithium-ion batteries contain graphite (sourced from the anode) and different metals in the form of oxides (sourced from the cathode) in their composition.

In the present invention, the black mass sourced from discarded lithium-ion batteries from electric or hybrid motor vehicles is formed by the anode and the cathode due to the great difficulty of separating both in batteries of this type. The elemental composition of the assembly formed by the anode and cathode of a discarded lithium-ion battery from an electric or hybrid motor vehicle is as follows:
- 30-33% C,
- 10-30% Ni,
- 5-15% Mn,
- 3-5% Li,
- 2-6% Co, and
- 1-3% Cu.

Graphite was obtained by means of a chemical process of dissolving metals, primarily nickel, cobalt, lithium and manganese. This chemical process consisted of the etching of the black mass by means of an acid, which can be organic or mineral, in the presence of an oxidising agent. In the present invention, the etching was performed with an organic acid (citric acid) and also with a mineral acid (sulphuric acid). Ozone and hydrogen peroxide were used as oxidising agents. Acid concentrations comprised between 1.25 M and 2 M were used. The etching performed at 70 °C. When the oxidising agent was hydrogen peroxide, a concentration comprised between 5-10% v/v was used and when the agent was ozone, the etching solution was saturated.

After the etching reaction, which lasted between 60 minutes and 90 minutes, the suspension was filtered to obtain a solution containing the metals and then treated by various methods to achieve the selective separation thereof and a solid (graphite), which was washed with water and dried at a temperature comprised between 50°C and 60°C for a time comprised between 1 hour and 2 hours.

The oxidation of graphite was based on the use of strong oxidising agents under acidic conditions. In the present invention, the oxidation of graphite was carried out using the method of Tour *et al.* (Marcano, D.C., Kosynkin, D.V., Berlin, J.M., Sinitskii, A., Sun, Z.Z., Slesarev, A., Alemany, L.B., Lu, W., and Tour, J.M. (2010). Improved Synthesis of Graphene Oxide. Acs Nano 4, 4806-4814)

At the operational level, the method followed was the following: 3 g of graphite powder and 18 g of KMnO₄ were added to a beaker (800 ml). Next, 400 ml of a mixture of concentrated H₂SO₄ and H₃PO₄ were added at a 9:1 ratio and left under magnetic stirring at 50°C overnight. Subsequently, 400 ml of ultrapure water ice were added to the mixture made, producing an exothermic reaction. It was kept under stirring and 6 ml of H₂O₂ were added, observing a change in colour to yellowish, indicating the end of the oxidation reaction. The mixture was decanted overnight after which the supernatant was removed using a Pasteur pipette. 200 ml of milli-Q water was added and filtered through a pore 3 filter plate.

Washing the oxidised product: In order to remove the manganese oxide formed during the previous oxidation process, 200 ml of 1 M HCl were added and stirred on a plate for 1 hour. It was filtered and the solid was subsequently added to separate high-capacity centrifuge tubes (up to 500 ml), adding ultrapure water until the volume was 400 ml. They were centrifuged at 8000 rpm for 1 hour, after which the pH of the supernatant liquid was checked with indicator paper and this was removed with the help of a pipette. This operation was repeated as many times as necessary until a pH of about 5-6 was reached. The solid was transferred to Petri dishes and frozen at -80°C for about 48 hours to then lyophilise same for another 48 hours. The graphite oxide thus obtained was pulverised, transferred to a vial and stored in a desiccator until use.

In the present invention, the exfoliation of graphite oxide was carried out by means of preparing GrO dispersions in ultrapure water with a volume of 60 ml and a concentration of 5 mg·ml⁻¹. These suspensions were prepared in 100 ml beakers and subjected to separate sonication processes. The first consisted of placing them in a water bath sonicator and sonicating them for 1 hour in 4 cycles of 15 minutes each. In order to avoid an excessive rise in temperature that could lead to a premature reduction of graphite oxide, 400 ml of crushed ice were added to the bath before each cycle. Next, each of the prepared dispersions were taken to an ultrasonic probe where they were sonicated for another additional hour divided into 2 cycles of 30 minutes. For the same reason stated above, during the sonication process the beakers were placed in a crushed ice bath. Clear and homogeneous dispersions of graphene oxide (GO) without precipitates were thereby obtained.

In the present invention, the reduction of graphene oxide (GO) was carried out by a combined hydrothermal-chemical method with a subsequent calcination step in an inert atmosphere in order to obtain a reduced graphene oxide (rGO) with a high C/O ratio, in other words, with a high degree of reduction.
- Black mass BM1: C/O ratio=3.67
- Black mass BM2: C/O ratio=3.71

At the operational level, the method was the following:
Hydrothermal reduction: the previously prepared graphene oxide (GO) dispersions were transferred to stainless steel hydrothermal reactors with a PTFE vessel. Once closed, they were placed in an oven and heated at 120°C for 48 hours, after which they were removed from the oven and allowed to cool for 1 hour before opening the reactors.

Chemical reduction: The reduced material was compacted in the aqueous medium and transferred to a 100 ml beaker. 50 ml of ultrapure water and 6 g of ascorbic acid (reducing agent) were added to each beaker. Magnetic stirrers were added and they were subjected to stirring for 48 hours at room temperature.

Washing and drying: After this time elapsed, the contents of the beakers were transferred to 80 ml centrifuge tubes and subjected to a first centrifugation at 10,000 rpm for 1 hour to remove ascorbic acid. Ultrapure water (80 ml) was then added back to each tube and washed by centrifugation for 1 hour at 10,000 rpm, then removing the supernatant liquid. This process was repeated once more to complete the washing of the reduced product. Once washing was completed, the contents of the tubes were transferred to a ceramic crucible and dried under vacuum at 60°C for 24 hours.

Calcination: The product thus dried was transferred to refractory vessels and taken to a tubular furnace where it was subjected to a final calcination step at 400°C in an argon (Ar) atmosphere for 24 hours, with a temperature rise step of 5°C·min⁻¹. The finally calcined product was subjected to grinding in an agate mortar, weighed, transferred to a vial and stored in a desiccator until use.

### Characterisation

All the synthesised samples have been characterised morphologically, structurally and chemically. For this purpose, the following techniques have been used:
- Wavelength dispersive X-ray fluorescence (WD-XRF): AXIOS equipment (Malvern-Panalytical) equipped with a Rh tube that can reach up to 4 KW has been used. The samples were analysed in powder form by means of the ONMIAN semiquantitative method developed by Malvern-Panalytical for the determination of the elemental composition of each sample.
- X-ray diffraction (XRD): For the structural determination of the samples, X' Pert PRO equipment (Malvern-Panalytical) with a Cu tube (λ=1.54 Å) was used. Each sample was analysed from 10 to 120° 2Θ at a speed of 0.02° 2Θ/1 s and a current of 45 mA with a voltage of 40 kV. For the identification of the crystalline phases, the HighScore Plus Malvern-(PANalytical) software and the Inorganic Crystal Structure Database (ICSD) were used.
- Porosity and specific surface area: The Brunauer-Emmett-teller (BET) method was used to characterise the specific surface area of the tested samples and for this purpose ASAP 2020 equipment (Micromeritics) was used. To study the porosity of the samples, the t-Plot method was used.
- Elemental Analysis (EA): The total carbon content has been determined by combustion using a Leco CS 244 instrument.

Starting from black mass BM1 of graphite recovered from lithium-ion batteries, two different treatments have been performed:
a) Sample LM2_1 is sourced from the treatment of black mass BM1 with 2 M H₂SO₄ + 5% v/v H₂O₂.
b) Sample LM2_3 is sourced from the treatment of black mass BM1 with 1.25 M citric acid + 1 % v/v H₂O₂.

From these starting samples, two identical syntheses have been performed, giving rise to the subsamples shown in Table 1, according to an oxidation process applying the method of Tour *et al.* (Marcano, D.C., Kosynkin, D.V., Berlin, J.M., Sinitskii, A., Sun, Z.Z., Slesarev, A., Alemany, L.B., Lu, W., and Tour, J.M. (2010). Improved Synthesis of Graphene Oxide. Acs Nano 4, 4806-4814), obtaining graphene oxide GO-LM2 and a hydrothermal-chemical reduction obtaining the reduced graphene oxide rGO-LM2:

**Table 1: Synthesised samples**

| Starting graphite | Graphene oxide | Reduced graphene oxide |
|---|---|---|
| LM2_1 | GO-LM2_1 | rGO-LM2_1 |
| LM2_3 | GO-LM2_3 | rGO-LM2_3 |

Table 2 presents the results obtained from the elemental characterisation, by X-ray fluorescence (XRF), of the original and synthesised samples. Carbon analysis has been performed by combustion. The starting samples (LM2_1 and LM2_3) exhibit a high carbon content (83.5 on average) and, as expected, its percentage decreases in the graphene oxide samples (GO-LM2_1, GO-LM2_3), increasing the proportion of oxygen that justifies the oxidation of graphite. In samples rGO-LM2_1 and rGO-LM2_3, the carbon concentration increases again due to the graphene oxide reduction process.

The major elements present in the starting samples (LM2_1 and LM2_3), in addition to carbon and oxygen, are fluorine, aluminium and copper, as can be observed in Table 2. Copper is removed in the first treatment, that is, by oxidising graphite to graphene oxide in both samples (GO-LM2_1 and GO-LM2_3), however, fluorine survives oxidation, although its concentration decreases and it is completely removed in the reduction process (rGO-LM2_1 and rGO-LM2_3). In turn, aluminium cannot be completely removed with these treatments. A greater survival of aluminium is observed in the treatment with citric acid and hydrogen peroxide.

The other elements present in the starting samples (LM2_1 and LM2_3) have very low concentrations. The increase in concentration of some of them is due, in large part, to the reagents used in each phase of the synthesis, which reagents, as can be observed in Table 2, are removed in large part in the final products (rGO-LM2_1 and rGO-LM2_3), although, in a general manner, the concentration of these elements is a little higher in sample LM2_3, which corresponds to the sample treated with citric acid and hydrogen peroxide, and their persistence is also greater after the oxidation and reduction processes.

**Table 2: Elemental composition obtained by XRF of the samples synthesised from sample LM2_1.**

| Element | LM2_1 | LM2_3 | GO-LM2_1 | GO-LM2_3 | rGO-LM2_1 | rGO-LM2_3 |
|---|---|---|---|---|---|---|
| C* | 84 | 83 | 41 | 41 | 76 | 77 |
| O** | 3.2 | 2.8 | 52 | 50 | 21 | 21 |
| F | 8.0 | 8.0 | 4.8 | 4.4 | - | - |
| Cu | 3.3 | 2.8 | 0.010 | 0.027 | 0.012 | 0.023 |
| Al | 2.5 | 2.1 | 0.85 | 0.94 | 1.5 | 1.9 |
| S | 0.080 | 0.057 | 0.83 | 1.7 | 0.021 | 0.0076 |
| Si | 0.043 | 0.053 | 0.034 | 0.57 | 0.10 | 0.24 |
| Ni | 0.027 | 0.026 | 0.00092 | 0.0046 | 0.0050 | 0.0063 |
| P | 0.021 | 0.016 | 0.052 | 0.06 | 0.018 | 0.0022 |
| Cl | 0.019 | 0.020 | 0.16 | 0.22 | 0.0048 | 0.021 |
| Mn | 0.011 | 0.021 | 0.30 | 1.4 | 0.12 | 0.21 |
| Fe | 0.0084 | 0.012 | 0.0017 | 0.020 | 0.012 | 0.055 |
| Co | 0.0056 | 0.012 | - | - | - | - |
| Ca | 0.0045 | 0.0089 | 0.0028 | 0.0082 | 0.0050 | 0.012 |
| Ti | 0.0044 | 0.0072 | 0.0021 | 0.0032 | 0.034 | 0.062 |
| Zr | 0.0025 | 0.022 | - | - | - | 0.019 |
| Cr | 0.0022 | 0.0042 | - | 0.0019 | 0.0016 | 0.0030 |
| Na | - | 0.02 | - | 0.054 | - | 0.042 |
| K | - | - | 0.063 | 0.048 | 0.017 | 0.0092 |
| Mo | - | - | - | 0.0044 | - | - |
| Br | - | - | 0.0017 | 0.0039 | - | - |
| Ge | | - | - | 0.0020 | - | - |
| Zn | - | - | - | - | 0.012 | 0.012 |
| V | - | 0.0015 | - | - | - | 0.0020 |

| | | | | | | |
|---|---|---|---|---|---|---|
| *: Value obtained by elemental analysis. **: Value obtained by difference. | | | | | | |

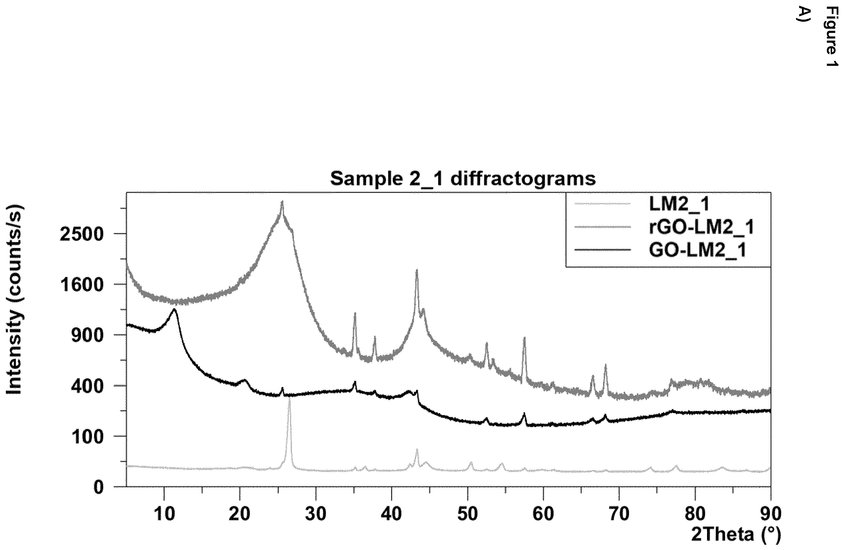

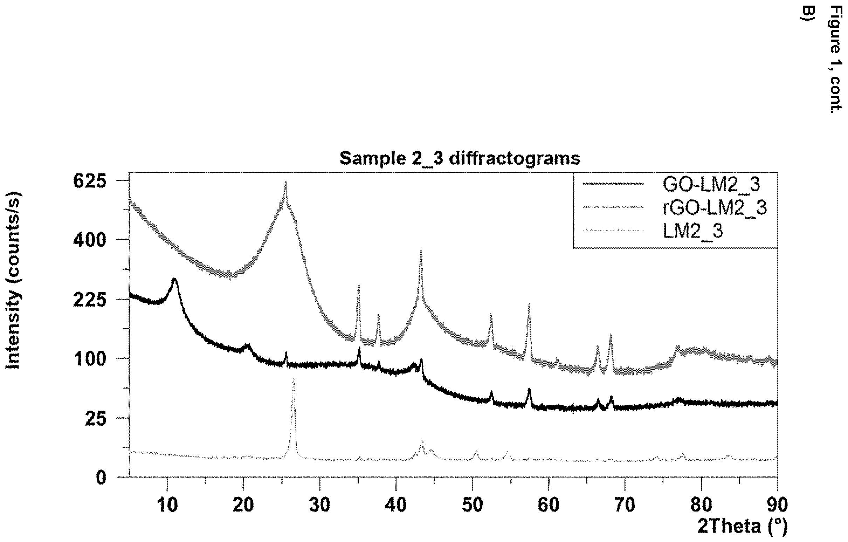

From the structural analysis of all the samples synthesised from the graphites referred to as LM2_1 and LM2_3, performed by XRD, the diffractograms shown in Figure 1A and 1B were obtained. Figure 1A shows a comparison between sample LM2_1 and the subsamples synthesised from it (GO-LM2_1 and rGO-LM2_1). Similarly, Figure 1B shows a comparison between sample LM2_3 and the subsamples synthesised from it (GO-LM2_3 and rGO-LM2_3).

From the diffractograms shown in Figure 1, it can be deduced that in the original samples (LM2_1 and LM2_3), in addition to the peaks due to graphite (PDF: 01-089-8487), other peaks are observed due to impurities that correspond to the crystalline phases shown in Table 3. The crystalline phases correspond to copper and aluminium compounds, however, in Table 2, results obtained by XRF, a high concentration of fluorine is observed in the samples (8.0%), which suggests that F is part of a compound that has an amorphous structure.

**Table 3: Crystalline phases present in samples LM2-1 and LM2_3.**

| Sample | Compound | Name | File |
|---|---|---|---|
| LM2_1 | Cu | Copper | 03-065-9026 |
| | C | Graphite | 01-089-8487 |
| | Al₂O₃ | Aluminium oxide | 01-074-0323 |
| | Cu₂O | Copper oxide | 01-077-0199 |
| LM2_3 | Cu | Copper | 03-065-9743 |
| | C | Graphite | 03-065-6212 |
| | Al₂O₃ | Aluminium oxide | 01-075-0783 |
| | C6 H8 O7 | Citric acid | 00-016-1157 |

The persistence of the peaks due to impurities is observed in the diffractograms of Figure 1A and B of samples GO-LM2_1, GO-LM2_3, rGO-LM2-1 and rGO-LM2-3, but from the results obtained by X-ray fluorescence (Table 2) it is deduced that the majority impurities in the original sample LM2-1 and LM2-3 (F, Al, Si and Cu) the only element that is observed in all the samples is aluminium. Therefore, these peaks are due to the Al₂O₃ phase.

Graphite has been completely transformed into graphene oxide in both processes (GO-LM2_1, GO-LM2_3), as can be seen in Figure 1A and B, since the main graphite peak (26.5°(2θ)) has shifted almost completely to the left to a value of about 11°(2θ). After the hydrothermal-chemical treatment (rGO-LM2_1 and rGO-LM2_3) the graphene oxide recovers its graphitic structure and the main peak shifts again to the right, recovering its initial position close to 26° (2θ) but with a greater peak width indicating a semi-amorphous or less layered structure.

The number of layers of the reduced graphene oxide samples (rGO-LM2_1 and rGO-LM2_3) has been studied by applying the Scherrer equation. The obtained results are shown in Table 4. These results show that sample rGO-LM2_3 has a lower number of layers, 82 versus 128 for rGO-LM2_1, which means that this sample is more exfoliated, which is consistent with the largest specific surface area measured in this sample (406.26 m²/g).

**Table 4: Structural data of the samples synthesised from sample LM2_1.**

| Samples | Specific surface area (m².g⁻¹) | Pore volume (cm³.g⁻¹) | Micropore volume (cm³.g⁻¹) | Number of layers |
|---|---|---|---|---|
| rGO-LM2_1 | 217.61 | 0.122394 | 0.042605 | 128 |
| rGO-LM2_3 | 406.26 | 0.231891 | 0.046714 | 82 |

Sample LM3_1 corresponds to a sample of graphite (black mass BM2) recovered from lithium-ion batteries treated with 2 M H₂SO₄ + 5% v/v H₂O₂. An oxidation process has been performed on this starting sample applying the method of Tour *et al.,* obtaining the graphene oxide referred to as GO-LM3_1 and a hydrothermal-chemical reduction obtaining the reduced graphene oxide referred to as rGO-LM3_1.

Table 5 presents the results obtained from the elemental characterisation, by XRF, of the original and synthesised samples. Carbon analysis has been performed by combustion: The starting sample exhibits a high percentage of carbon and, as expected, its percentage decreases in the graphene oxide sample (GO-LM3_1), increasing the proportion of oxygen that justifies the oxidation of graphite. In sample rGO-LM3_1, the carbon concentration increases again due to the graphene oxide reduction process. In this sample, the impurities at the highest concentration correspond to the elements silicon and aluminium; furthermore, the two elements are mostly removed in the oxidation process.

The other elements present in the original sample have very low concentrations. The increase in concentration of some of them is due, in large part, to the reagents used in each phase of the synthesis, which reagents, as can be seen, are removed in large part in the final product (rGO-LM3_1).

**Table 5: Elemental composition obtained by XRF of the samples synthesised from sample LM3_1.**

| Element | LM3_1 | GO-LM3_1 | rGO-LM3_1 |
|---|---|---|---|
| C | 92 | 41 | 78 |
| O | 2.8 | 57 | 21 |
| Si | 2.0 | 0.79 | 0.74 |
| Al | 0.42 | 0.13 | 0.28 |
| Fe | 0.058 | 0.0064 | 0.015 |
| P | 0.037 | 0.042 | 0.00089 |
| S | 0.018 | 1.1 | 0.0016 |
| Ni | 0.017 | 0.0014 | 0.0027 |
| Cr | 0.012 | 0.0012 | - |
| Cu | 0.012 | - | 0.0020 |
| Ti | 0.0045 | 0.0018 | 0.037 |
| Ca | 0.0036 | 0.0036 | 0.0081 |
| Cl | 0.0024 | 0.25 | 0.0071 |
| Zr | 0.0016 | - | 0.029 |
| Co | 0.0013 | - | - |
| Mn | - | 0.15 | 0.072 |
| K | - | 0.10 | 0.012 |
| Br | - | 0.014 | - |
| Zn | - | 0.0010 | 0.0046 |
| V | - | - | 0.0018 |

| | | | |
|---|---|---|---|
| *: Value obtained by elemental analysis. **: Value obtained by difference. | | | |

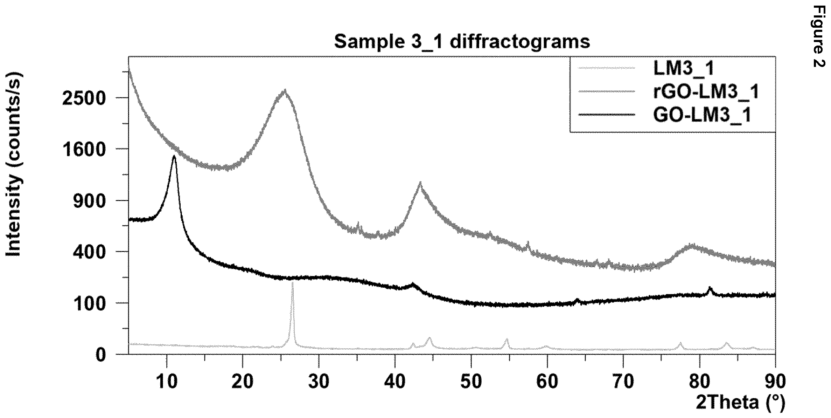

From the structural analysis of all the samples synthesised from graphite referred to as LM3_1, performed by XRD, the diffractograms shown in Figure 2 were obtained. Said

Figure 2 shows a comparison of the diffractograms of the starting sample (LM3-1), the sample after oxidation by applying the method of Tour *et al.* (GO-LM3_1) and the sample obtained after hydrothermal-chemical reduction (rGO-LM3_1).

As can be seen in Figure 2, in the original sample, in addition to the peaks due to graphite, other peaks due to impurities which correspond to the crystalline phases shown in Table 6 are observed. These impurities are removed after the oxidation treatment since they are not noticeable in the diffractogram of GO-LM3_1 nor in that of rGO-LM3_1. X-ray fluorescence analysis, the results of which are shown in Table 5, corroborates that both aluminium and silicon, major impurities, are removed for the most part in the oxidation process.

**Table 6: Crystalline phases present in sample LM3-1.**

| Compound | Name | File |
|---|---|---|
| C | Graphite | 01-089-8487 |
| SiO₂ | Silicon oxide | 00-029-0085 |
| Al₂O₃ | Corundum | 01-089-3072 |

The graphite has been completely transformed into graphene oxide (GO-LM3_1), as can be seen in Figure 2, since the main graphite peak (26.5°(2θ)) has shifted completely to the left to a value of about 11°(2θ). After the hydrothermal-chemical treatment the graphene oxide recovers its graphitic structure and the main peak shifts again to the right, recovering its initial position close to 26° (2θ) but with a greater peak width indicating a semi-amorphous or less layered structure.

The number of layers of the reduced graphene oxide sample (rGO-LM3_1) has been studied by applying the Scherrer equation, obtaining a value of 313 (Table 7). In this case, since there are more stacked layers, the specific surface area is not very high, corresponding to 119 m². g⁻¹.

**Table 7: Structural data of the samples synthesised from sample LM3_1.**

| Samples | Specific surface area (m².g⁻¹) | Pore volume (cm³.g⁻¹) | Micropore volume (cm³.g⁻¹) | Number of layers |
|---|---|---|---|---|
| rGO-LM3_1 | 118.73 | 0.062307 | 0.017583 | 313 |

The starting graphites corresponding to recovered black masses BM1 and BM2 exhibit in all cases a high percentage of carbon that would indicate a good recovery process, although in the case of black mass BM2 treated with 2 M H₂SO₄ + 5% v/v H₂O₂, sample referred to as LM3_1, the carbon concentration corresponds to 92%, which is slightly higher than the concentration of graphites LM2_1 and LM2_3 of 84% and 83%, respectively. Furthermore, black mass BM1 exhibits a greater number of impurities and in a greater proportion as demonstrated by the analyses performed by XRF on samples LM2_1 and LM2_3. In this sense, it seems that the treatment with sulphuric acid applied to graphite LM3_1 is more effective.

Although it is based on graphites of different purity, the oxidation process is similar in both cases since a graphene oxide with a very similar carbon concentration is obtained. Furthermore, the results obtained by XRD demonstrate that in both cases, a very extensive oxidation of graphite occurs, although in the case of graphites LM2_1 and LM2_3, the oxidation process is not capable of completely removing the starting impurities.

In the hydrothermal-chemical reduction processes, the graphene structure is recovered again, as can be seen from the XRD results, the carbon concentration increasing again with very similar values in both types of black mass. In this case, as in oxidation, in samples rGO-LM2-1 and rGO-LM2-3 the contribution of aluminium compounds cannot be removed.

Although the syntheses applied in both cases are the same, from the results obtained from the calculation of the number of layers by the Scherrer equation, and from the specific surface data obtained from the BET method, it can be deduced that samples rGO-LM2-1 and rGO-LM2-3 are samples that are more exfoliated and have a higher proportion of micropore volume than sample rGO-LM3_1, as well as a greater specific surface area. Specifically, sample rGO-LM2_3 exhibits the best results with a specific surface area of around 400 m². g⁻¹, a highly appreciated characteristic in some applications of materials of this type.

Graphite samples LM2_1 and LM2_3 sourced from black mass BM1 exhibit similar concentrations of impurities despite having been subjected to different treatments, although it could be said that after the syntheses the persistence of impurities is slightly higher in sample LM2_3 which was treated with citric acid and hydrogen peroxide.

## Claims

1. A method for obtaining reduced graphene oxide, **characterised in that** it comprises the following steps:
a) leaching the black mass comprising graphite sourced from discarded lithium-ion batteries from electric or hybrid motor vehicles, wherein the elemental composition of said black mass comprises:
∘ between 30% and 33% C,
∘ between 10% and 30% Ni,
∘ between 5% and 15% Mn,
∘ between 3% and 5% Li,
∘ between 2% and 6% Co, and
∘ between 1% and 3% Cu,
at a temperature of between 50°C and 100°C in the presence of
• an acid selected from citric acid and sulphuric acid, wherein the concentration of said acid ranges between 1.25 M and 2 M, and
• an oxidising agent selected from ozone and hydrogen peroxide,
for a period of time comprised between 60 min and 90 min;
b) mixing the graphite powder obtained in step (a) with potassium permanganate KMnO₄, wherein the ratio of graphite powder: potassium permanganate KMnO₄ is between 0.9:6 and 1.1:6;
c) mixing the product obtained in step (b) with a mixture consisting of
• sulphuric acid H₂SO₄ at a concentration of between 17.9 M and 18.1 M, and
• phosphoric acid H₃PO₄ at a concentration of between 15.3 M and 15.5 M,
wherein the ratio of sulphuric acid H₂SO₄: phosphoric acid H₃PO₄ is 9:1;
d) adding ultrapure water ice and then hydrogen peroxide H₂O₂ to the product obtained in step (c) and settling the graphite oxide obtained by removing the supernatant;
e) preparing an aqueous dispersion with the graphite oxide obtained in step (d), wherein the concentration of graphite oxide is between 4.8 mg·ml⁻¹ and 5.2 mg·ml⁻¹,
f) heating the aqueous dispersion obtained in step (e) in a hydrothermal reactor at a temperature of between 115°C and 125°C and for a period of time between 46 h and 50 h;
g) reducing the product obtained in step (f) with ascorbic acid at room temperature between 15°C and 25°C and for a period of time between 46 h and 50 h;
h) washing the product obtained in step (g) with ultrapure water and centrifugation;
i) drying the solid product obtained from step (h) at a temperature of between 55°C and 65°C and under vacuum for a period of time between 22 h and 26 h; and
j) calcining the product obtained in step (i) at a temperature of between 390°C and 410°C in an argon atmosphere for a period of time between 24 h and 28 h and grinding.

2. The method according to claim 1, wherein, in step (h), centrifugation is carried out between 10,000 rpm and 10,100 rpm.

3. The method according to any of claims 1 or 2, wherein step (h) is repeated.

4. The method according to any of claims 1 to 3, wherein the calcination of step (j) is carried out with a temperature ramp of between 4.5°C. min⁻¹ and 5°C·min⁻¹.
